# EUROPÄISCHE PATENTSCHRIFT

(11) **EP 0 924 130 B1**
(45) Veröffentlichungstag und Bekanntmachung des Hinweises auf die Patenterteilung: **21.08.2002**
(21) Anmeldenummer: 98123810.8
(22) Anmeldetag: 15.12.1998
(51) Int. Cl.: B61D 45/00, B61D 3/16, B60P 3/00

(54) **Transportwagen für den Schienenweg**
Railway freight car
Wagon de marchandises ferroviaire

(30) Priorität: 20.12.1997 DE 19757029
(43) Veröffentlichungstag der Anmeldung: 23.06.1999
(73) Patentinhaber: Schmirler, Anton, 45966 Gladbeck (DE)
(72) Erfinder: Schmirler, Anton, 45966 Gladbeck (DE)
(74) Vertreter: Schmidt, Norbert, Rechtsanwalt

(56) Entgegenhaltungen:
- EP-A- 0 332 040
- DE-B- 1 243 102
- GB-A- 951 095
- GB-A- 986 269
- US-A- 3 921 538

## Beschreibung

Die Erfindung betrifft einen Transportwagen mit Tragegestell für den Schienenweg gemäß dem Oberbegriff von Anspruch 1.

Es ist bekannt, z. B. beim Transport von Flachglastafeln diese mittels eines Spezial-Lkws, in den ein Tragegestell eingesetzt ist, zu transportieren. Bei dem Tragegestell handelt es sich um ein Gestell, welches bei Flachglas-Produktionsanlagen verwandt wird.

Dabei wird dieses Gestell mit Glastafeln bestückt, die direkt vom Transportband der Produktionsanlage auf das Gestell verladen bzw. gehoben werden. Die maximale Größe einer Glastafel, die auf ein solches Gestell geladen werden, beträgt 3,21 x 6,0 m = H x L. Das Gewicht des leeren Gestells beträgt 1,3 t. Das mit zwei Stapeln Flachglas beladene Gestell hat ein Gewicht von 25 t.

Die Spezial-Lkws sind nun in der Lage, das beladene Gestell, so wie es ist und an Ort und Stelle aufzunehmen. Um das beladene Gestell aufzunehmen, setzt der Lkw zurück und nimmt das Gestell auf. Der Spezial-Lkw weist keinen Boden auf, er hat lediglich eine Art Randzone entlang seiner Längsseiten. Am Gestell befinden sich ebenfalls seitliche Randzonen, die in Korrespondenz mit der Randzone des Laderaumes des Lkws treten. Es entsteht eine griffeste Verbindung. Befindet sich das Gestell im Inneren des Lkws und ist "eingerastet", so wird der Lkw hydraulisch hoch gefahren und hebt das mit Glas bestückte Tragegestell auf. Während des Transportes ist das Gestell fest fixiert.

Nun kann die Glasladung zum Gewünschten Zielort transportiert werden. Am Zielort angekommen, erfolgt der Entladevorgang. Zum Abladen wird das Gestell hydraulisch abgelassen und der Lkw kann weggefahren werden. Die Flachglasscheiben können nun vom Gestell entnommen werden.

Nachteilig bei der Lkw-Verladung ist, daß aufgrund des hohen Gewichts eines beladenen Gestells nur ein Gestell pro Zugmaschine transportiert werden kann. Eine Umweltbelastung durch Auspuffgase sowie eine zusätzliche Belastung der Autobahnen und Straßen läßt sich nicht vermeiden. Nachteilig ist weiter, daß das Gestell beim Transport fixiert ist und sich nicht in Längsrichtung bewegen kann. Die bei der Fahrt auftretenden Stoß- und Schubkräfte übertragen sich daher auf die im Verhältnis zum Gestell weniger fest fixierten Glastafeln. Dies kann zur Verwindung der Glastafeln und zu Glasbruch führen.

Aus der EP 0 332 040 ist bekannt, Flachglastafeln mittels eines speziellen Eisenbahnwagens zu befördern. Hierzu ist ein speziell konstruiertes Eisenbahnchassis vorgesehen, welches aus zwei Halbchassis besteht, die in der Mitte (am Trennende) mittels einer Hilfsträgervorrichtung verbunden werden können. An den Enden jedes Chassisteiles ist ein rollendes Trägerelement angeordnet mit einem Chassisteil darauf. Die Chassisteile bewirken die steife Verbindung zwischen den beiden Längsträgern. Die freien Enden der Längsträger werden mittels Verbindungsbügel verbunden. Die Verbindungsbügel sind so angeordnet, daß sie einen freien Durchgang für den aufzuladenden Bock bzw. das beladene Glastragegestell gewähren. Die Längsträger sind mit Mitteln zum Tragen des Bockes ausgestattet, die auf Hubzylindern montiert sind, welches es erlauben, den Bock vom Boden aufzuheben oder zum Boden abzusenken.

Mit dem Gegenstand gemäß der EP 0 332 040 ist es möglich, ein mit Glastafeln beladenes herkömmliches Tragegestell mittels Hubvorrichtung am speziell konstruierten Eisenbahnchassis, direkt auf den Eisenbahnwagen zu heben bzw. zu verladen. Der Umschlag auf einen Lkw mit Innenladergestell ist ebenfalls möglich.

Nachteilig bei dem Gegenstand gemäß der EP 0 332 040 ist, daß die erfindungsgemäße Hubvorrichtung sehr aufwendig ist und die Kosten für einen so ausgestatteten Eisenbahnwagen immens sind.

Darüber hinaus ist speziell geschultes Personal zur Bedienung des so ausgestatteten Wagens erforderlich. Auch ist das Gestell während des Transportes fest fixiert, so daß eine Längsbewegung des Gestells nicht möglich ist mit der Folge, daß sich die beim Transport auftretenden Stoß- und Schubkräfte auf das im Verhältnis zum Gestell weniger fest fixierte Ladegut übertragen können.

Eine andere bekannte Art des Transportes von Flachglastafeln mittels Eisenbahnwagen sieht vor, daß das Trägergestell und der Wagen eine feste Einheit bilden müssen.

Hierzu muß ein spezielles für diese Art von Eisenbahntransport vorgesehenes Gestell und ein für den Transport dieses Spezialgestells speziell abgewandelter Eisenbahntransportwagen eingesetzt werden. Das Gestell muß mit dem Wagen verschraubbar sein und der Wagen muß die Möglichkeit bieten, daß auf ihm ein Gestell aufgeschraubt werden kann. Das für den Bahntransport konzipierte Gestell ist schwer und hat ein Leergewicht von 4 t. Das beladene Spezialgestell wiegt zwischen 27 und 28 t.

Aber auch der Verladevorgang ist aufwendig. Er sieht wie folgt aus: Vom Transportband werden die Flachglastafeln auf ein herkömmliches Tragegestell aufgesetzt. Dann wird das Gestell mittels Kran oder Lkw zu einem freien Verladeplatz verbracht. Dort werden die Flachglastafeln auf das Spezialladergestell für den Bahntransport umgeladen. Die Glasscheiben müssen auf dem Gestell stirnseitig und über die gesamte Länge mittels einer aufwendigen Ladungssicherung manuell gesichert werden. Das beladene Spezialgestell wird nun mittels Kran auf den Wagen aufgesetzt. Das Gestell mit dem gesicherten Glas muß nun auf dem Boden des Wagens fest verschraubt werden. Dies erfolgt per Hand. Zum Schutz des Glases müssen noch Planen oder Hauben über das Gestell gelegt werden.

Beim Transport selbst kommt es durch die starre Fixierung des Gestells häufig schon bei normalen Bremsvorgängen und der üblichen Vibration während der Fahrt zu Glasschäden. Wenn auch ein Totalschaden der Ladung relativ selten eintritt, so kommt es bei vielen Verladungen von Einzelscheiben zu sog. "Einläufen" (Sprünge im Glas). Schuld daran sind Zentrifugal- und Schubkräfte, die bei der Fahrt entstehen und wirken und sich nicht auf das festgeschraubte Spezialgestell übertragen können, wohl aber auf die "relativ" bewegliche Glasladung. Die Stoß- und Schubkräfte bewirken ein Verschieben der Befestigungs- und Absicherungsmaterialien, so daß Druck auf die Glastafeln entsteht. Schon kleinste Verschiebungen beim Befestigungsmaterial lassen aufgrund der Größe der Tafeln, Verwindungskräfte entstehen, die zu den zuvor beschriebenen Glasschäden führen.

Nachteilig bei dieser Beförderungsmethode ist:
- Man braucht ein Spezialgestell für den Transport; Dies verursacht zusätzliche Anschaffungskosten.
- Das Spezialgestell ist besonders schwer: Dies verursacht zusätzliche Transportkosten.
- Die großen Glastafeln müssen vom Tragegestell auf das Spezialgestell umgeladen werden. Hierzu ist zumeist zuvor der Transport des beladenen Tragegestells zum Spezialgestell notwendig. Dies ist ein erheblicher logistischer und kostenmäßiger Aufwand.
- Die Glasladung muß aufwendig auf dem Spezialgestell gesichert werden, dies bedeutet einen hohen Personalaufwand und hohe Kosten für Verpakkungsmaterial wie Holz und Kunststoffe.
- Das Spezialgestell muß mittels eines besonderen Kranes auf den Eisenbahnwagen aufgesetzt werden.
- Ein speziell ausgestatteter Eisenbahnwagen mit einer speziellen Vorrichtung, die die starre Fixierung des Gestells ermöglicht, ist notwendig,
- Bei der Beförderung ist die Gefahr von Glasschäden sehr hoch.
- Zum Abladen ist das gleiche umständliche kosten- und zeitintensive Um- und Verladen wie beim Aufnehmen der Ladung nötig.

Aus der Auslegeschrift DE 1 243 102 B ist bekannt, eine Lagerung für den Transport empfindlicher Lasten auf der Bodenplatte eines Fahrzeuges vorzusehen, und zwar mittels Kufen, welche die Last aufnehmen. Die Kufen sind in seitlich verlaufenden Führungen gelagert, die in Längsrichtung des Fahrzeuges verlaufen und in Längsrichtung verankert sind. Die Gleitkufen sind auf die Breite der Last einstellbar und weisen Öffnungen zur verstellbaren Halterung von Anschlägen zum Verzurren der Last auf. Die Verankerung der Gleitkufen erfolgt über elastische Stoßdämpfer.

In der DE 1 243 102 B ist eine Ausführungsform beschrieben, bei der ein Bock, so wie er in herkömmlicherweise für den Transport von Glasscheiben verwendet wird, an seinem Fuß auf Gleitkufen befestigt ist. Mit dem Gegenstand gemäß der DE 1 243 102 B ist es möglich, Gegenstände von unterschiedlicher Größe und Gestalt zu befördern und Stöße von der Last fernzuhalten. Nachteilig bei dieser Art des Transportes ist, daß ein hochkompliziertes Kufengestell, sozusagen als zusätzliche Transportvorrichtung, benötigt wird, auf welches das zu transportierende Gut montiert werden muß. Komplizierte Anpaß- und Einstellvorgänge bzgl. der Gleitkufenbreite etc. sind nötig. Neben den Kosten für die komplizierte Spezialvorrichtung fallen auch noch Kosten für Spezialpersonal an, welches die Vorrichtung bedienen und einstellen kann.

Aufgabe der Erfindung ist es, eine Bahntransportmöglichkeit für Großtafeln oder Platten, z. B. Flachglastafeln zu schaffen, die eine Spezialvorrichtung vermeidet und Schutz vor der Übertragung von Stoß- und Schubkräften während des Transportes gewährt.

Die Aufgabe der Erfindung wird gemäß dem kennzeichnenden Teil von Anspruch 1 gelöst.

So ist sichergestellt, daß die Kräfte, die während der Fahrt auf den Wagen wirken, sich auf das "bewegliche Gestell" übertragen können, welches die Energie durch Rutschen nach vorne oder hinten verzehrt.

Die Bewegung der Glastafeln ist minimal und da die gesamte Bewegung im "Rutsch-Fluß" erfolgt, unschädlich. Die Erfindung stellt sicher, daß die während des Transportes auftretenden Stoß- und Schubkräfte sich nicht schädlich auf die Ladung, also auf die Glastafeln, übertragen können. Die durch den Transport auftretenden Stoß- und Schubkräfte werden von der Ladung ferngehalten.

Mit der Erfindung wird ein hoch kompliziertes logistisches Problem gelöst. Es ist erstmals möglich, alle Vorteile unterschiedlicher Verfahren und Vorrichtungen beim Transport von Großplatten auf dem Schienenweg und/oder auf dem Lkw zu vereinen. Der erfindungsgemäße Wagen macht es möglich, ein Glastragegestell zu verwenden, welches ab Ende der Glasproduktionslinie bis zum Weiterverarbeitungsbetrieb durchgehend eingesetzt werden kann - nur dieses muß transportiert werden - es ist kein Umladen nötig. Weiter sicherzustellen, daß die bei einem Transport auftretende Stöße und Schübe abgefedert und so die Ladung vor Beschädigung und Bruch geschützt wird und all dies ohne den Einsatz einer komplizierten und teuren Transportvorrichtung. Der erfindungsgemäße Transportwagen bietet eine ökonomische und eine ökologische Lösung für den Transport von Großtafeln oder Platten.

Das beladene Gestell kann, so wie es ist, auf den erfindungsgemäßen Wagen verbracht werden. Besonderes Vertäuen und Verschrauben des Gestells mit der Bodenplatte oder mit dem Wagen ist nicht nur nicht nötig, sondern absichtlich nicht gewollt. Die Rutschzone vor und hinter dem Gestell, also die gewollte "Beweglichkeit" des Gestells in Längsrichtung, ermöglichst erst das Verzehren der beim Transport auftretenden Schub- und Stoßenergie durch das Gestell und nicht durch die Ladung.

Gemäß einer bevorzugten Ausgestaltung der Erfindung ist die Rutschzone an beiden Enden des Wagens ca. 50 bis 70 cm bzw. beträgt sie 55 cm.

Die Ausdehnung der Rutschzone ist so bemessen, daß eine ausreichende Sicherheitsreserve für die mögliche Rutschbewegung des Gestells gegeben ist, selbst bei leicht überhöhter Geschwindigkeit des Transportzuges.

Eine weitere Ausgestaltung der Erfindung sieht vor, daß die Ladefläche mit einem rutschfestem Material belegt ist oder aus einem solchen besteht. Eine "geführte" und kalkulierte Rutschbewegung des Gestells ist gewollt, um für ein kontrolliertes Abfangen der Stoß- und Schubenergie zu sorgen. Mit Hilfe des rutschfesten Bodenbelages ist es möglich, die Rutschzone klein zu halten und zu kalkulieren.

Eine weitere Ausgestaltung der Erfindung sieht vor, daß die Ladefläche mit querliegend angeordneten Holzbohlen belegt ist, in die in Längsrichtung des Wagens Auflager eingelassen sind. So ist es möglich, das Durchbiegen der Querbolzen zu vermindern bei der Aufnahme des beladenen Tragegestells.

Eine weitere Ausgestaltung der Erfindung sieht vor, daß die Ladefläche des Wagens seitliche Führungsleisten zur seitlichen Positionierung für ein dazwischen gesetztes Gestell aufweist, die symmetrisch nahe jeder Ecke der Ladefläche unter Abstand zur Längs- und Stirnseite der Ladefläche angeordnet sind. Wird das Gestell auf den Wagen gehoben, so geben die durch die Führungsleisten gesetzten Eckpunkte eine Orientierungshilfe und ermöglichen eine saubere Positionierung des Gestells auf der Ladefläche.

Eine weitere Ausgestaltung der Erfindung sieht vor, daß die Strecke zwischen den in Längsrichtung des Wagens angeordneten Führungsleisten kleiner als die Längserstreckung des Gestells ist, wobei das Gestell die Führungsleisten gleichmäßig an jeder Seite und bis zu 60 cm überragt. Diese Position der Führungsleisten ermöglicht es auf evtl. Längen anderer Tragegestelle für andere Materialien zu reagieren und darüber hinaus den Führungsleisten neben der Funktion der besseren Gestellpositionierung noch weitere Funktionen zuzuweisen.

Eine weitere Ausgestaltung der Erfindung sieht vor, daß die Strecke der in Querrichtung gegenüberliegenden Führungsleisten unwesentlich größer als die Breitenerstreckung des Gestells ist. Diese Anordnung stellt sicher, daß das Gestell gerade auf die Ladefläche aufgesetzt wird.

Eine weitere Ausgestaltung der Erfindung sieht vor, daß die Führungsleisten quer zum Gestell angeordnete U-Träger sind mit daran breitseitig angeordneten Sicherungsbolzen. Die Sicherungsbolzen ermöglichen das Gestell in Querrichtung festzusetzen.

Gemäß einer weiteren Ausgestaltung der Erfindung kippen die Seiten der U-Träger schräg vom Gestell weg, wobei der Winkel zwischen Gestell und U-Träger größer 90 ° ist. Die schräge Anstellung des U-Trägers hilft, das auf die Ladefläche aufzusetzende Gestell in seine Position einzuführen. Es kann an der äußeren Kante des U-Trägers langsam nach unten auf seine Position auf der Ladefläche rutschen. Der U-Träger führt, leitet und lenkt das Gestell.

Eine weitere Ausgestaltung der Erfindung sieht vor, daß die Sicherungsbolzen als Kippsicherung auf das Gestell aufschiebbar sind, wobei das Gestell mit aufgeschobenen Sicherungsbolzen nur in Längsrichtung bewegbar ist. Der aufgeschobene Sicherungsbolzen verhindert ein Kippen des Gestells in Querrichtung. Er behindert aber nicht die Beweglichkeit bzw. Bewegbarkeit des Gestells in Längsrichtung. So ist sichergestellt, daß das beladene Gestell nicht kippen kann, auf der anderen Seite aber die beim Transport auftretende Stoßund Schubkräfte durch Rutschen verzehren kann.

Eine weitere Ausgestaltung der Erfindung sieht vor, daß an beiden Längsseiten der Ladefläche Halterungen zum seitlichen Fixieren des Glases angeordnet sind. Die Halterungen sichern die Position des Glases und fixieren dieses. Sie verhindern bei auftretenden Zentrifugalkräften ein Auffächern der Platten.

Gemäß einer weiteren Ausgestaltung der Erfindung sind jeweils zwei Halterungen symmetrisch im mittleren Bereich der Längsseiten der Ladefläche als seitliche Sicherung der Glastafeln gegen Kippen angeordnet. Die symmetrische Anordnung der Halterungen im mitfleren Teil der Glastafeln ermöglichen einen ausgewogenen und gleichmäßigen "Haltedruck" der Halterungen auf die Tafeln.

Eine weitere Ausgestaltung der Erfindung sieht vor, daß jede Halterung einen Stempel aufweist, der an das Glas anstellbar ist. Der Stempel ermöglicht eine zusätzliche Beweglichkeit der Halterung und verbessert die Anpassung der Halterung an den Anstellwinkel der Glasladung.

Eine weitere Ausgestaltung der Erfindung sieht vor, daß der Stempel aus der Halterung hydraulisch ausfahrbar ist. So ist die Halterung einfach, leicht und bedienfreundlich.

Eine weitere Ausgestaltung der Erfindung sieht vor, daß auf die Glastafeln als Kantenschutz Pufferplatten z. B. aus Styropor angeordnet sind. Styropor reagiert leicht plastisch nachgebend und schützt so zuverlässig die Kanten.

Gemäß einer bevorzugten Ausgestaltung der Erfindung ist die Ladefläche niedrig wie bei einem Unterflur-Wagen, wobei die Ladefläche von der Schienenoberkante aus eine Höhe von ca. 62 cm aufweist. So ist sichergestellt, daß eine ausreichende Ladehöhe resultiert.

Gemäß einer weiteren Ausgestaltung der Erfindung ist an der Stirnseite der Ladeflächen eine Stirnwand mit der Wagenwand über ein Schiebeverdeck zum Schützen der Ladung verbindbar. So kann der Wagen bei Bedarf abgedeckt werden. Auch schützt ein Schiebeverdeck das Glas vor evtl. auftretenden Kondenswasserschäden.

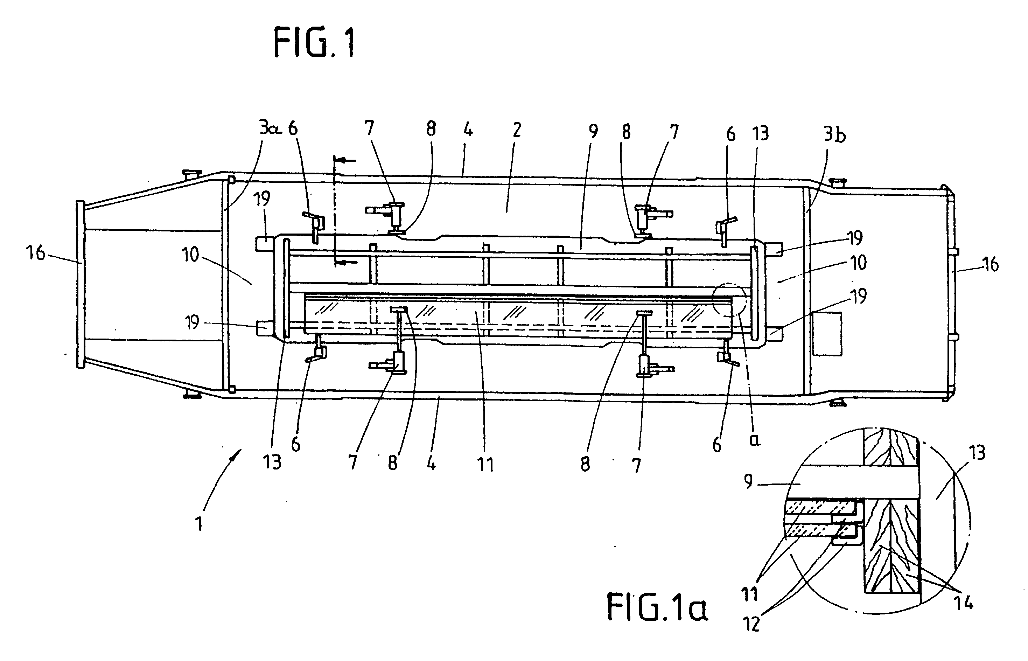

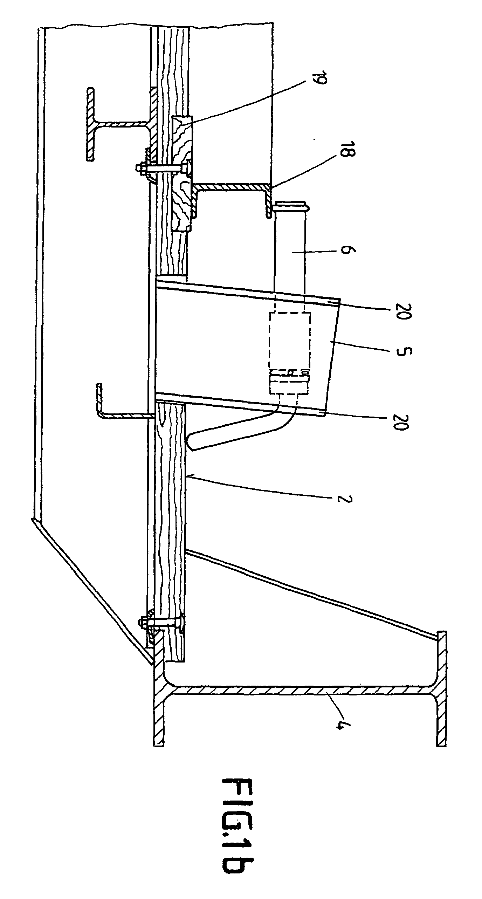

Gemäß einer weiteren Ausführungsform der Erfindung sind im Leerraum zwischen den Glaspaketen und den Stirnseiten des Gestells Quersicherungen für die achsiale Stabilisierung der Glastafeln eingefügt, siehe Figur 1 a. Sollte ein starkes Bremsmanöver notwendig sein, so ist die Rutschmöglichkeit der Glastafeln begrenzt.

Ein Ausführungsbeispiel der Erfindung ist in den Zeichnungen dargestellt, und zwar zeigt:
- Fig. 1 :: Eine Draufsicht auf den erfindungsgemäßen Transportwagen.
- Fig. 1 a:: Einen Ausschnitt aus einer weiteren Ausführungsform
- Fig. 1 b:: Einen Schnitt entlang der Schnittlinie aus Fig. 1

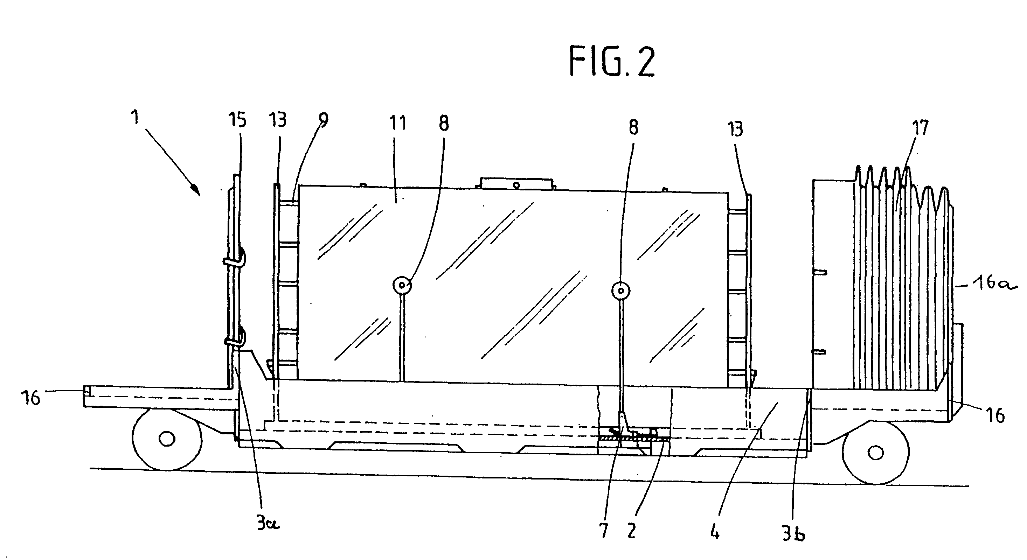

- Fig. 2 :: Eine Seitenansicht des erfindungsgemäßen Transportwagens

Der in den Zeichnungen dargestellte erfindungsgemäße Transportwagen ist zweiachsig und hat einen Achsenabstand von 10 m. Die Ladefläche 2 des Wagens 1 beträgt: 8,05 x 2,40 m (L x B). Die Ladeflächenhöhe von der Schienenoberkante aus beträgt 0,62 m. Der Boden bzw. die Ladefläche 2 ist mit einem rutschfestem Material belegt z.B. Holzbohlen, die quer liegend angeordnet sind. In den Boden 2 sind Auflager 19 in Längsrichtung des Wagens 1 eingelassen. Sie dienen zur Verminderung der Durchbiegung der Querbolzen. Auf dem Holzfußboden ist ein rutschhemmender Anstrich aufgebracht. Auf die Ladefläche 2 kann ein Gestell 9 zum Laden von Flachglasstapeln (Höhe x Länge = 3,21 x 6,0 m, Gewicht 23 t) aufgesetzt werden. Die Länge des Gestells 9 beträgt 6,87 m und seine Standbreite beträgt ca. 1,42 m.

An der Stirnseite 3 a der Ladeflächen 2 kann eine Stirnwand 15 die Ladefläche 2 begrenzen. Die Stirnwand 15 und die Wagenwand 16 a kann zum Halten und Anbringen eines Schiebeverdeckes 17 zum Schützen der Ladung verwendet werden. Die Fläche zwischen der Stirnwand 15 und dem Ende des Wagens, also der Stirnseite 16 kann freigelassen werden als Trittfläche.

Auf der Ladefläche 2 sind vier Führungsleisten 5 symmetrisch angeordnet. Die Führungsleisten 5 sind vier nahe jeder Ecke der Ladefläche 2 unter Abstand zur Längsseite 4 und Stirnseite 3 angeordnete U-Träger (Profil). Die U-Träger 5 sind quer zum Gestell 9 angeordnet. Jeder U-Träger 5 ist mit breitseitig angeordneten Sicherheitsbolzen 6 ausgestattet. Die U-Träger 5 sind schräg aufstehend - vom Gestell weg - ausgerichtet. Der Winkel zwischen dem Gestell 9 und den Seiten 20 des Trägers 5 ist größer als 90 °. Das Außenmaß des U-Trägers beträgt (L x B x H) 0,75 x 0,20 x 0,27 m. Der Abstand der U-Träger 5 zu den Stirnseiten 3 beträgt ca. 1,175 m; der Abstand zu den Längsseiten 4 beträgt ca. 0,255 m. Der Abstand der in Querrichtung gegenüberliegenden U-Träger 5 ist unwesentlich größer als die Breite des Gestells 9.

Im mittleren Bereich der Längsseiten 4 sind je zwei Halterungen 7 angeordnet. Der Abstand der Halterungen 7 zu den Stirnseiten 3 beträgt ca. 2,10 m. Die Halterungen 7 sind liegend angeordnet und können im Gebrauchsfall hochgeklappt werden (ca. Höhe = 2,08 m). An ihren Enden sind hydraulisch ausfahrbare Stempel 8 angeordnet mit einem Ausfahrbereich von ca. 77 cm.

In Gebrauch wird das mit Glastafeln beladene Gestell 9 von oben auf die Ladefläche 2 des Wagens 1 mittig aufgesetzt, so daß am vorderen und am hinteren Ende der Ladefläche 2 des Wagens 1 eine Rutschzone 10 von ca. 50 bis 60 cm entsteht. Um eine mittige Positionierung auch in Bezug zu den Längsseiten 4 der Ladefläche 2 zu gewährleisten, dienen die Führungsleisten bzw. die U-Träger 5. Die schräg aufstehenden U-Träger 5 helfen das Gestell 9 während des Absetzens in die richtige Position zu bringen. Sie führen, leiten und lenken das Gestell 9, so daß es in die mittige Position zwischen den U-Trägern 5 rutscht. Nun wird der Bolzen 6 über den bodenseitigen Längsholm 18 des Tragegestells 9 geschoben und mit einer halben Drehung verriegelt, siehe Figur 1 b. Das Gestell 9 ist damit gegen seitliches Kippen gesichert.

Die auf den Längsholm 18 des Gestells 9 aufgeschobenen Bolzen 6 verhindern ein seitliches Verschieben des Gestells 9 bzw. eine Kippbewegung, lassen aber die Bewegung bzw. das Rutschen des Gestells 9 in Längsrichtung zu. Das aufgesetzte Gestell 9 überragt in Längsrichtung die Führungsleisten 5 gleichmäßig an jeder Seite um knapp 60 cm. Die Rutschzone 10 zwischen dem Gestellende des Gestells 9 und den Stirnseiten 3 a/3 b der Ladefläche 2 beträgt an jedem Ende ca. 0,55 m.

Um die Glasladung gegen Kippen in Querrichtung zu sichern, werden die Halterungen 7 aufgestellt bzw. aufgerichtet und die Stempel 8 hydraulisch ausgefahren bis sie gegen die Glasstapel 11 drücken. Auf die Kanten der Glastafeln 11 werden als Kantenschutz Pufferplatten 12, z. B. aus Styropor, angelegt bzw. aufgelegt.

Eine weitere Ausführungsform gemäß Figur 1 a sieht vor, im Leerraum zwischen den Glastafeln 11 und den Stirnwänden 13 des Gestells 9 lückenlos Quersicherungen 14 einzufügen.

Bei der Durchführung von Auflaufversuchen wurde im Versuch mit der höchsten Geschwindigkeit, nämlich bei einem Auflaufstoß mit 9,65 km/h: 27,0 cm Verschub des Gestells auf der Ladefläche gemessen. Bei einer Rutschzone von mehr als 50 cm ist somit eine ausreichend Sicherheitsreserve gegeben.

Der erfindungsgemäße Wagen ist ohne Sondergenehmigung der europäischen Eisenbahn und somit ohne Lademaßüberschreitung europaweit einsatzfähig. Ebenso ist er "fährbootfähig" und somit auch für den Transport von/nach Großbritannien und Skandinavien einsetzbar. Die bahntechnische Bauartbezeichnung ist: Limms. Der Wagen hat die EBA-Kenn-Nr.; EBA 96H02A 001.

Die Erfindung ist auch anwendbar bei einem gleichgearteten vierachsigen Wagen unter Anpassung bzw. entsprechender Verlängerung der Rutschzone.

### Stückliste

- 1: Glastransportwagen
- 2: Ladefläche
- 3a /b: Stirnseite der Ladefläche
- 4: Längsseite der Ladefläche
- 5: Führungsleisten/U-Träger
- 6: Sicherungsbolzen
- 7: Halterung
- 8: Hydraulisch ausfahrbarer Stempel
- 9: Tragegestell
- 10: Rutschzone
- 11: Glastafeln
- 12: Dämmaterial/Puffer
- 13: Vordere Querstreben bzw. Stirnseite des Gestells
- 14: Quersicherungen
- 15: Stirnwand der Ladefläche
- 16: Stirnseite des Wagens
- 16 a: Stirnwand des Wagens
- 17: Verdeck
- 18: Längsholm des Gestells
- 19: Auflager
- 20: Seiten des U-Trägers

## Patentansprüche

1. Transportwagen mit Tragegestell für den Schienenweg zum Transportieren von auf dem Tragegestell angeordneten Tafeln oder Platten, z.B. Flachglastafeln, wobei die Ladefläche des Wagens bei mittig aufgestelltem Tragegestell am vorderen und hinteren Ende eine Zone aufweist, die über die Länge des Tragegestells hinausgeht, **dadurch gekennzeichnet, daß** die Ladefläche (2) mit einem rutschfesten Material belegt ist oder aus einem solchen besteht, um für ein kontrolliertes Abfangen von beim Transportieren auftretenden Stoß- und Schubenergien zu sorgen, wobei die Energien durch Rutschen des Tragegestells (9) in Wagenlängsrichtung innerhalb einer Rutschzone verzehrt werden.

2. Transportwagen nach Anspruch 1, **dadurch gekennzeichnet, daß** die Rutschzone (10) an beiden Enden des Wagens (1) je 50 - 70 cm beträgt.

3. Transportwagen nach Anspruch 2, **dadurch gekennzeichnet, daß** die Rutschzone (10) an beiden Enden des Wagens (1) 55 cm beträgt.

4. Transportwagen nach Anspruch 3, **dadurch gekennzeichnet, daß** die Ladefläche (2) mit querliegend angeordneten Holzbohlen belegt ist in die in Längsrichtung des Wagens (1) Auflager (19) eingelassen sind.

5. Transportwagen nach einem der vorhergehenden Ansprüche, **dadurch gekennzeichnet, daß** die Ladefläche (2) des Wagens (1) seitliche Führungsleisten (5) zur seitlichen Positionierung für ein dazwischen gesetztes Gestell (9) aufweist, wobei die Führungsleisten (5) symmetrisch nahe jeder Ecke der Ladefläche (2) unter Abstand zur Längs- (4) und Stirnseite (3) der Ladefläche (2) angeordnet sind und der Abstand der Führungsleisten (5) zur Stirnseite (3) ca. 1,175 m und der Abstand zur Längsseite (4) ca. 0,255 m beträgt.

6. Transportwagen nach Anspruch 5, **dadurch gekennzeichnet, daß** die Strecke zwischen den in Längsrichtung des Wagens (1) angeordneten Führungsleisten (5) kleiner als die Längserstreckung des Gestells (9) ist, wobei das Gestell (9) die Führungsleisten (5) gleichmäßig, an jeder Seite und bis zu 60 cm überragt.

7. Transportwagen nach einem der Ansprüche 5 oder 6, **dadurch gekennzeichnet, daß** die Strecke der in Querrichtung gegenüberliegenden Führungsleisten (5) unwesentlich größer als die Breitenerstreckung des Gestells (9) ist, wobei die Führungsleisten (5) quer zum Gestell (9) angeordnete U-Träger sind mit daran breitseitig angeordneten Sicherungsbolzen (6).

8. Transportwagen nach Anspruch 7, **dadurch gekennzeichnet, daß** die Seiten (20) der U-Träger (5) schräg vom Gestell (9) wegkippen, wobei der Winkel zwischen Gestell (9) und U-Träger (5) größer als 90 ° ist.

9. Transportwagen nach einem der Ansprüche 7 oder 8, **dadurch gekennzeichnet, daß** die Sicherungsbolzen (6) als Kippsicherung auf das Gestell (9) aufschiebbar sind.

10. Transportwagen nach einem der Ansprüche 7 bis 9, **dadurch gekennzeichnet, daß** das Gestell (9) mit aufgeschobenen Sicherungsbolzen (6) nur in Längsrichtung bewegbar ist.

11. Transportwagen nach einem der vorhergehenden Ansprüche, **dadurch gekennzeichnet, daß** an beiden Längsseiten (4) der Ladefläche (2) Halterungen (7) zum seitlichen Fixieren des Glases (11) angeordnet sind.

12. Transportwagen nach Anspruch 11, **dadurch gekennzeichnet, daß** jeweils zwei Halterungen (7) symmetrisch im mittleren Bereich der Längsseiten (4) der Ladefläche (2) als seitliche Sicherung der Glastafeln (11) gegen Kippen angeordnet sind.

13. Transportwagen nach Anspruch 11 oder 12, **dadurch gekennzeichnet, daß** jede Halterung (7) einen Stempel (8) aufweist, der an das Glas (11) anstellbar ist, wobei der Stempel (8) aus der Halterung (7) hydraulisch ausfahrbar ist.

14. Transportwagen nach einem der vorhergehenden Ansprüche mit Glastafeln, **dadurch gekennzeichnet, daß** auf die Glastafeln (11) als Kantenschutz Pufferplatten (12) z.B. aus Styropor angeordnet sind.

15. Transportwagen nach einem der vorhergehenden Ansprüche mit Glastafeln, **dadurch gekennzeichnet, daß** die Ladefläche (2) niedrig wie bei einem Unterflur-Wagen angeordnet ist.

16. Transportwagen nach einem der vorhergehenden Ansprüche mit Glastafeln, **dadurch gekennzeichnet, daß** die Ladefläche (2) von der Schienenoberkante aus eine Höhe von ca. 62 cm aufweist.

17. Transportwagen nach einem der vorhergehenden Ansprüche mit Glastafeln, **dadurch gekennzeichnet, daß** an die Stirnseite (3 a) der Ladefläche (2) eine Stirnwand (15) mit der Wagenwand (16 a) über ein Schiebeverdeck (17) zum Schützen der Ladung verbindbar ist.

18. Transportwagen nach einem der vorhergehenden Ansprüche mit Glastafeln, **dadurch gekennzeichnet, daß** im Leerraum zwischen den Glaspaketen (11) und den Stirnseiten (13) des Gestells (9) Quersicherungen (14) für die achsiale Stabilisierung der Glastafeln (11) eingefügt sind.

## Claims

1. Haulage wagon for rail transports including a support element for transporting panels or plates, such as for instance flat glass panels, wherein the loading surface of said wagon carrying the support element arranged at the centre thereof comprises at the front and rear ends thereof an area extending beyond the longitudinal extension of the support element,
**characterized in that**
the loading surface (2) is coated with or consists of a nonskid coating for controllably absorbing shock or thrust energies, said energies being compensated within a sliding area by the sliding movement of the support element (9) in the longitudinal direction of the wagon.

2. Haulage wagon as defined by claim 1,
**characterized in that**
that the sliding area (10) provided at both ends of the haulage wagon (1) has a length of about 50 to 70 cm.

3. Haulage wagon as defined by claim 2,
**characterized in that**
that the sliding area (10) provided at both ends of the haulage wagon (1) has a length of 55 cm.

4. Haulage wagon as defined by claim 3,
**characterized in that**
the loading surface (2) is covered with transverse planks comprising bearings (19) arranged in the longitudinal direction of the wagon (1).

5. Haulage wagon as defined by one of the preceding claims,
**characterized in that**
said loading surface (2) of wagon (1) includes lateral guide elements (5) for laterally positioning an intermediate holder (9), said guide elements (5) being symmetrically spaced adjacent the edges of the loading surface (2) with respect to the longitudinal side (4) and he front side (3) of the loading surface (2), the distance between the guide elements (5) and the front side (3) being about 1.175 m, and the distance with respect to the longitudinal side (4) being about 0.255 m.

6. Haulage wagon as defined by claim 5,
**characterized in that**
the distance between the guide elements (5) arranged in the longitudinal direction of the wagon (1) is smaller than the longitudinal extension of the holder (9), and that said holder (9) uniformly extends beyond the guide elements (5) at both sides thereof over a distance of about 60 cm.

7. Haulage wagon as defined by either of claims 5 or 6,
**characterized in that**
the length of the transversely opposed guide elements (5) is slightly larger than the width of the holder (9), and that said guide elements (5) are U-shaped beams comprising safety bolts (6) arranged over the width thereof.

8. Haulage wagon as defined by claim 7,
**characterized in that**
the lateral portions (20) of said U-shaped beams (5) may be laterally tilted away from said holder (9), and that the angle between said holder (9) and the U-shaped beam (5) is larger than 90°.

9. Haulage wagon as defined by either of claims 7 or 8,
**characterized in that**
said safety bolt (6) may be slid onto said holder (9) for preventing the tilting movement thereof.

10. Haulage wagon as defined by either of claims 7 to 9,
**characterized in that**
when the safety bolt (6) is secured on the holder (9), said holder is movable only in the longitudinal direction.

11. Haulage wagon as defined by either of the preceding claims,
**characterized in that**
support elements (7) are arranged at both longitudinal sides (4) of the loading surface (7) for laterally securing a glass panel (11).

12. Haulage wagon as defined by claim 1,
**characterized in that**
a pair of support elements (7) symmetrically arranged in the centre area of the longitudinal sides (4) of the loading surface (2) is provided for laterally securing the glass panels (11) against a tilting movement.

13. Haulage wagon as defined by either of claims 1 or 2,
**characterized in that**
each of said support elements (7) comprises a plunger (8) which may be applied to the glass panel (11), and that said plunger (8) may be hydraulically pulled out of said support elements (7).

14. Haulage wagon as defined by either of the preceding claims,
**characterized in that**
the edges of said glass panels (11) are protected by means of buffer plates (12) made for instance of Styrofoam.

15. Haulage wagon as defined by either of the preceding claims,
**characterized in that**
the loading surface (2) is arranged in a low position, such as for instance in an underfloor motor vehicle.

16. Haulage wagon as defined by either of the preceding claims,
**characterized in that**
the distance between the loading surface (2) and the upper edge of the rail amounts of about 62 cm.

17. Haulage wagon as defined by either of the preceding claims,
**characterized in that**
that at the front face (3a) of the loading surface (2) a front wall (15) may be connected by means of a sliding canopy (17) to the wagon wall (16a) for protecting the loaded articles.

18. Haulage wagon as defined by either of the preceding claims,
**characterized in that**
transverse safety devices (14) are arranged in the free space between the glass panels (11) and the front sides of the holder (9) for axially stabilizing the glass panels (11).

## Revendications

1. Wagon transporteur sur rail comprenant un bâti de support pour transporter des panneaux ou plaques disposés sur ledit bâti de support, tels que qu par exemple des panneaux de verre plats, dans lequel la surface de chargement comportant dans son centre ce bâti de support comprend à ces extrémités avant et arrière une zone dépassant la longueur du bâti de support,
**caractérisé en ce que**
la surface de chargement (2) est couverte d'un matériau antidérapant ou consiste d'un tel matériau antidérapant permettant la compensation contrôlée des efforts de choc ou de poussée générés pendant les opérations de transport, ces énergies étant compensées par le déplacement du bâti de transport (9) dans la direction longitudinale du wagon à l'intérieur d'une zone de dérapage.

2. Wagon transporteur suivant la revendication 1,
**caractérisè en ce** que
la zone de dérapage (10) prévue aux deux extrémités du wagon (1) a une dimension variant entre 50 et 70 cm.

3. Wagon transporteur suivant la revendication 2,
**caractérisè en ce** que
la zone de dérapage (10) prévue aux deux extrémités du wagon (1) a une dimension de 55 cm.

4. Wagon transporteur suivant la revendication 3,
caractérisè en ce que
la surface de chargement (2) est couverte de madriers en bois comprenant des butées (19) disposées dans la direction longitudinale du wagon (1).

5. Wagon transporteur suivant l'une des revendications précédentes,
**caractérisé en ce que**
la surface de chargement (2) du wagon (1) est équipée d'éléments de guidage latéral (5) pour le positionnement latéral d'un cadre intermédiare (9), et **en ce que** les éléments de guidage (5) sont prévus de manière symmétrique au voisinage des bords de la surface de chargement (2) espacé du coté longitudinal (4) et de la face avant (3) de la surface de chargement, et **en ce que** la distance entre les éléments de guidage (5) et la face avant (4) est d'environ 0,255 m.

6. Wagon transporteur suivant la revendication 5,
**caractérisè en ce** que
la distance entre les éléments de guidage (5) prévus dans la direction longitudinale du wagon (1) est inférieure à la longueur du bâti de transport (9), en en ce que ce bâti de transport (9) dépasse à chaque coté de manière uniforme les éléments de guidage (5) d'une longueur de 60 cm.

7. Wagon transporteur suivant l'une des revendications 5 ou 6,
caractérisè en ce que
la longueur des éléments de guidage (5) transversalement opposés est un peu plus grande que la largeur du bâti de transport (9), et en ce que les éléments de guidage (5) sont des poutres sous forme d'un U disposés transversalement par rapport au bâti de transport (9) et comportant sur leur coté large des boulons de sécurité (6).

8. Wagon transporteur suivant la revendication 7,
**caractérisé en ce que**
les cotés (20) des poutres en forme d'un U (5) peuvent basculer transversalement par rapport au bâti de transport (9), et **en ce que** l'angle entre le bâti de transport (9) et les poutres en forme d'un U (5) est supérieur à 90°.

9. Wagon transporteur suivant l'une des revendications 7 à 9,
caractérisè en ce que
les boulons de sécurité (6) peuvent être glissés sur le bâti de transport (9) pour servir de stabilisateur évitant les mouvements de basculement.

10. Wagon transporteur suivant l'une des revendications 7 à 9,
**caractérisé en ce que**
avec les boulons de sécurité (6) mis en place sur le bâti de transport (9), ce bâti de transport (9) ne peut être déplacé que dans la direction longitudinale.

11. Wagon transporteur suivant l'une des revendications précédentes,
**caractérisè en ce** que
des supports (7) sont prévus sur les deux cotés longitudinaux (4) de la surface de chargement (7) destinés à la fixation latérale des panneaux de verre (11).

12. Wagon transporteur suivant la revendication 1,
**caractérisé en ce que**
une paire de supports (7) est disposée de manière symmétrique dans la zone centrale des cotés longitudinaux (4) de la surface de chargement (2) servant à la fixation latérale des panneaux de verre (11) pour éviter des mouvements de basculement.

13. Wagon transporteur suivant l'une des revendications 1 ou 2,
caractérisè en ce que
chacun des supports (7) comporte un tampon (8) pouvant être appliqué sur le panneau de verre (11), et en ce que ce tampon (8) est hydrauliquement amovible du support (7).

14. Wagon transporteur suivant l'une des revendications précédentes,
**caractérisé en ce que**
les panneaux de verre (11) comportent sur leurs extrémités des encadrements (12) de protection, consistant par exemple d'un polystyrène expansé.

15. Wagon transporteur suivant l'une des revendications précédentes,
**caractérisè en ce** que
la surface de chargement (2) est surbaissée comme par exemple dans un véhicule à moteur plat.

16. Wagon transporteur suivant l'une des revendications précédentes,
**caractérisé en ce que**
la surface de chargement (2) est disposée à une distance d'environ 62 cm par rapport au bord supérieur du rail.

17. Wagon transporteur suivant l'une des revendications précédentes,
caractérisè en ce que
sur la face avant (3a) de la surface de chargement (2) une face avant (15) est connectée par l'intermédiare d'une capote repliable (17) à la paroi du wagon (16a) pour protéger la charge.

18. Wagon transporteur suivant l'une des revendications précédentes,
**caractérisé en ce que**
dans l'espace libre entre les panneaux de verre (11) et les cotés avant (13) du bâti de support (9) sont prévus des dispositifs latéraux de sécurité (14) pour la stabilisation axiale des panneaux de verre.
